# EUROPEAN PATENT APPLICATION

(11) **EP 2 355 600 A1**
(43) Date of publication of application: **10.08.2011**
(21) Application number: 10191286.3
(22) Date of filing: 16.11.2010
(51) Int. Cl.: H04W 60/04

(54) **Apparatus and method for managing paging area**

(30) Priority: 29.01.2010 KR 20100008281
(71) Applicant: PANTECH CO., LTD., Seoul 121-270 (KR)
(72) Inventor: Cho, Hyung Soo, 121-781, Seoul (KR)
(74) Representative: Herzog, Markus

(57) **Abstract**

An apparatus and method for managing a paging area may induce a paging area to be allocated to a User Equipment (UE). A paging area may be controlled to be updated upon an occurrence of an event and may reduce traffic congestion.

## Description

### CROSS-REFERENCE TO RELATED APPLICATION

This application claims priority from and the benefit of Korean Patent Application No. 10-2010-0008281, filed on January 29, 2010, which is hereby incorporated by reference for all purposes as if fully set forth herein.

### BACKGROUND

1. Field

This disclosure relates to allocation of paging areas, and more particularly, to an apparatus and method for managing a paging area.

2. Discussion of the Background

A paging area may have different sizes depending on a use thereof A paging area may be a location area or a Tracking Area List (TAL). In this instance, paging areas optimized for a User Equipment (UE) may be registered, and accordingly, network resources may be consumed.

A UE is registered in a network to receive a paging message. Specifically, if a relatively large paging area is allocated to a fast-moving UE, a frequency of movement to another paging area is reduced, to thereby reduce a load caused by a location area update. However, in this instance, there is a problem in that a paging notification is sent over a wide region. Alternatively, if a relatively small paging area is allocated to the fast-moving UE to broadcast a paging notification over a narrow range, there is a problem that a frequency of a location area update may be increased. In other words, in a cellular system, the smaller the paging area, the greater the number of paging area update signals in an area with many gains and movements, thereby affecting a system signal load. However, if a larger paging area is maintained, a number of paging signal loads is increased, causing a waste of system resources.

### SUMMARY

Exemplary embodiments of the present invention provide a paging area management method and apparatus that induces a paging area to be allocated to a User Equipment (UE).

Exemplary embodiments of the present invention also provide a paging area management method and apparatus that controls a paging area to be updated upon an occurrence of an event in a UE, thereby decreasing traffic congestion.

Exemplary embodiments of the present invention also provide a paging area management method and apparatus that allocates a paging area to a UE based on a movement pattern of the UE.

Additional features of the invention will be set forth in the description which follows, and in part will be apparent from the description, or may be learned by practice of the invention.

An exemplary embodiment of the present invention discloses a method for managing a paging area, the method including determining a type of a currently allocated Tracking Area List (TAL) if a time period during which a User Equipment (UE) remains in a current Tracking Area (TA) exceeds a reference time period, transmitting a Tracking Area Update (TAU) request to a network manager of a network if the type of the currently allocated TAL is determined to be a TAL for a fast-moving equipment, and receiving a new TAL from the network manager.

An exemplary embodiment of the present invention discloses a method for managing a paging area, the method including measuring a mobility of a User Equipment (UE); determining a type of a currently allocated Tracking Area List (TAL); determining whether a current Tracking Area (TA) to which the UE belongs is changed; notifying a network manager of a network of the measured mobility of the UE if the type of the currently allocated Tracking Area List (TAL) does not correspond to the measured mobility of the UE and if the current TA to which the UE belongs is determined to be changed; and receiving a new TAL corresponding to the measured mobility of the UE from the network manager.

An exemplary embodiment of the present invention discloses a method for managing a paging area in a UE, the method including measuring a mobility of a User Equipment (UE); determining a type of a currently allocated Tracking Area List (TAL); determining whether a paging message is received, if the type of the currently allocated TAL does not correspond to the measured mobility of the UE; transmitting a paging response message containing the measured mobility of the UE to a network manager of a network, if the paging message is received; and receiving a new TAL corresponding to the measured mobility of the UE from the network manager.

An exemplary embodiment of the present invention discloses a method for managing a paging area in a UE, the method including measuring a mobility of a User Equipment (UE); determining a type of a currently allocated Tracking Area List (TAL); determining whether an access to a network occurs, if the type of the currently allocated TAL does not correspond to the measured mobility of the UE; transmitting a service request message containing the measured mobility of the UE to a network manager of a network, if the access to the network occurs; and receiving a new TAL corresponding to the measured mobility of the UE from the network manager.

An exemplary embodiment of the present invention discloses an apparatus for managing a paging area, the apparatus including a mobility measuring unit to measure a mobility of a User Equipment (UE); a storage unit to store an allocated Tracking Area List (TAL); a controller to compare the measured mobility of the UE with a type of the allocated TAL and to control a Tracking Area Update (TAU) based on an event, the event occurring in the UE; and a communication unit to transmit and/or receive a message used to perform the TAU.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating an example of a paging area update procedure according to an exemplary embodiment of the present invention.

FIG. 2 is a diagram illustrating an example of a Tracking Area List (TAL) according to an exemplary embodiment of the present invention.

FIG. 3 is a diagram illustrating a TAL reallocation operation according to an exemplary embodiment of the present invention.

FIG. 4 is a diagram illustrating a Tracking Area Update (TAU) operation according to an exemplary embodiment of the present invention.

FIG. 5 is a flowchart illustrating an example of a TAU triggering procedure using a periodic update timer.

FIG. 6 is a diagram illustrating a TAU operation according to an exemplary embodiment of the present invention.

FIG. 7 is a flowchart illustrating an example of a TAU triggering procedure according to a change in a TA.

FIG. 8 is a diagram illustrating a TAU operation according to an exemplary embodiment of the present invention.

FIG. 9 is a flowchart illustrating an example of a TAU triggering procedure with a paging response.

FIG. 10 is a diagram illustrating a TAU operation according to an exemplary embodiment of the present invention.

FIG. 11 is a flowchart illustrating an example of a TAU triggering procedure with an access by a UE to a network.

FIG. 12 is a block diagram illustrating a configuration of a UE according to an exemplary embodiment of the present invention.

FIG. 13 is a diagram illustrating a TAL allocation scheme according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

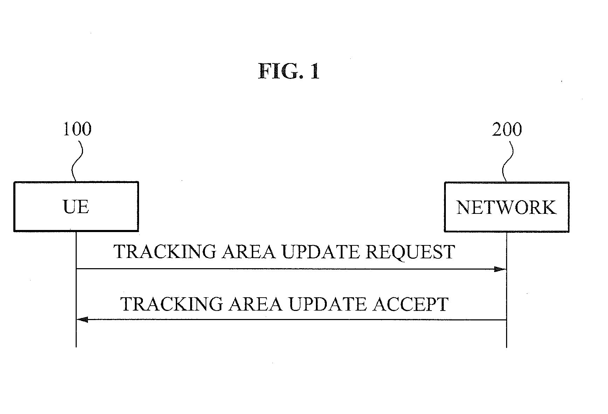

FIG. 1 is a diagram illustrating an example of a paging area update procedure according to an exemplary embodiment of the present invention. Referring to FIG. 1, if a paging area is to be updated, a User Equipment (UE) 100 may transmit a "Tracking Area Update (TAU) Request" message to a network 200. The network 200 may transmit a "TAU Accept" message containing paging area information to the UE 100. The paging area information may be a Tracking Area List (TAL). The TAL may include Tracking Area Identities (TAIs) to identify a plurality of Tracking Areas (TAs). In other words, each of the plurality of TAs may be identified by a corresponding TAI. In this instance, the network 200 may include a network manager to allocate a TAL to the UE 100.

A state where a channel is allocated to the UE 100 by the network 200 is referred to as a "dedicated state," and a state where no channel is allocated to the UE 100 is referred to as an "idle state." In the "dedicated state," the network 200 may be aware of a location of the UE 100 by cells. The Long Term Evolution (LTE) communication standard and other more recent communication standards may define a paging area as a concept of a TAL. Communication standards for a third generation (3G) communication system and communication standards provided prior to development of the 3G communication system define a paging area as a location area. For example, in the LTE communication standard, cells are collected to form a TA, and a list containing TAs is defined as a TAL. In exemplary embodiments of the present invention, it is assumed that a cell and a TA have the following attributes: (1) a cell is not allowed to belong to two or more TAs, and (2) a TA is not allowed to belong to two or more TALs.

Allocating of a TAL as a paging area may have some benefits. Specifically, if a paging area includes a plurality of TAs, it is possible to regulate the paging area based on a geographical characteristic. For example, in the case of a road or a subway through which a great number of UEs travel, a long or wide paging area may be set along the road or a track of the subway.

If the UE 100 enters a new TA, a TAI of the new TA may be checked, and whether the new TA belongs to a TAL that is allocated in advance may be determined. If the new TA is determined to belong to the TAL, the UE 100 may maintain the idle state without performing any operation. Alternatively, if the new TA is determined not to belong to the TAL, the UE 100 may perform the paging area update procedure, so that the new TAL may be allocated to the UE 100.

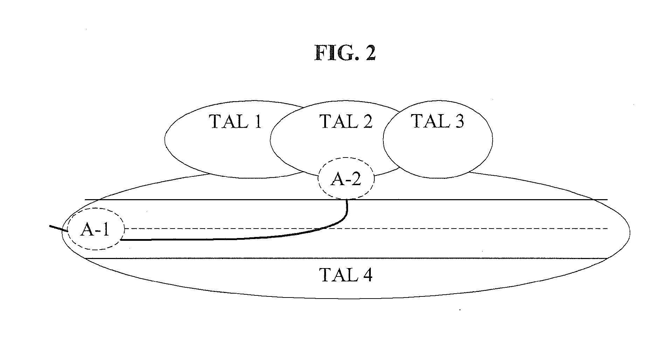

FIG. 2 illustrates an example of a TAL according to an exemplary embodiment of the present invention. The TAL may vary in size. Referring to FIG. 2, a TAL 4 is set to manage a long paging area, and a TAL 1, TAL 2, and TAL 3 are set to manage small paging areas, such as residential areas. A long paging area, such as the TAL 4, may be a TAL for a fast-moving UE, for example, on a road or a subway. A small paging area, such as the TAL 1, TAL 2, and TAL 3, may be a TAL for a stationary UE or a slow-moving UE.

Hereinafter, a fast-moving equipment is referred to as a "fast mobile," and a type of a TAL for a fast mobile is referred to as a "fast mobile TAL" or a "fast TAL." Also, a stationary UE and a slow-moving UE is referred to as a "stationary mobile" and a "slow mobile," respectively, and a type of a TAL for a stationary mobile or a slow mobile is referred to as a "slow mobile TAL" or a "stationary mobile TAL." Herein, the UE may be classified into a "fast mobile" and a "stationary mobile" or a "slow mobile," depending on its mobility. Here, various criteria to detect the mobility of the UE may be set depending on a design of a communication network.

If setting a TAL, a single TA may be overlapped between two or more TALs. A TA overlapped between two or more TALs may be referred to as an "overlapped TA." For example, the TAL 2 and TAL 4 are an overlapped TA at a location A-2. The overlapped TA may decrease a ping-pong phenomenon in which a UE repeats a reselection between two TALs. Accordingly, if the two TALs overlap with each other, an optimal TAL may be allocated.

As shown in FIG. 2, if the TAL 4 is allocated to a fast mobile, a number of Tracking Area Update (TAU) requests may be reduced. All of the TALs, namely, the TAL 1, TAL 2, TAL 3, and TAL 4, may be designed to have the overlapped TA. Assuming that a UE begins to travel on a road from the location A-1 and stops at a location A-2, TAL 4 may be allocated to the UE on the road. If the UE remains at the location A-2, the TAL 2 may be allocated to the UE. Specifically, if the UE remains at the location A-2, changing of a paging area for the UE to the TAL 2 may be more efficient in message traffic than allocating of the TAL 4 as a paging area. In this instance, if the mobility of the UE is changed, a TAL may be reallocated by methods that will be described below. A TAL reallocation may be performed by a TAU procedure. Herein, the "TAL reallocation," "TAU" and "TAL update" may have a same meaning.

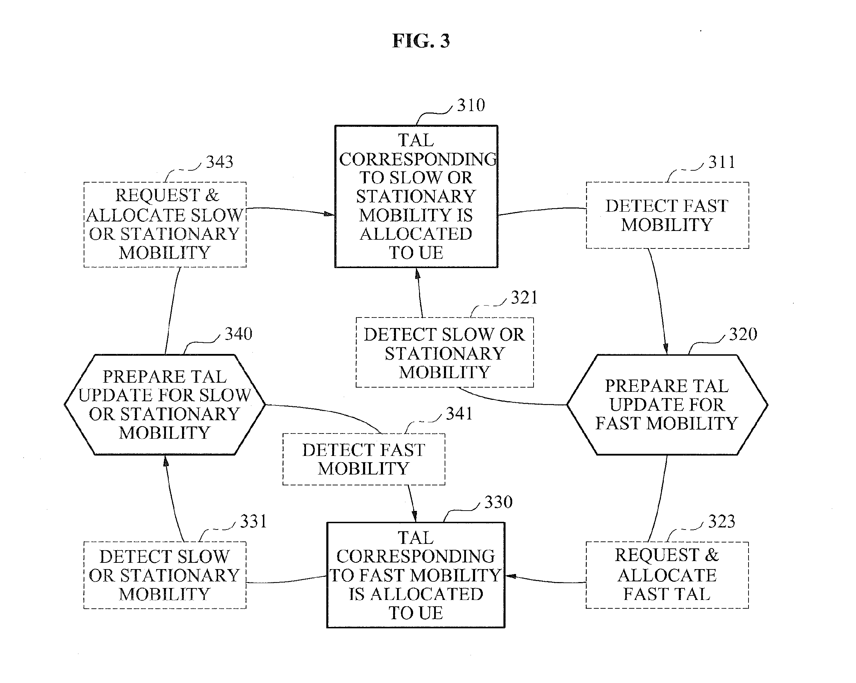

FIG. 3 is a diagram illustrating a TAL reallocation operation according to an exemplary embodiment of the present invention. Referring to FIG. 3, in a state 310 where a TAL corresponding to a slow mobility or a stationary mobility is allocated to a UE, if a fast mobility is detected in operation 311, the UE may prepare a TAL update for the detected fast mobility in operation 320. The UE may request a network to send a fast TAL so that the requested fast TAL may be allocated to the UE in operation 323. Alternatively, if a slow mobility or a stationary mobility is detected in operation 321 in the state 310, the UE may maintain the state 310. Or, if a slow mobility or a stationary mobility is detected after operation 320 in the state 310, the UE may maintain the state 310.

The UE may measure its own mobility. Here, the mobility of the UE may be measured by at least one of calculating a cell reselection frequency, measuring a moving velocity using a Global Positioning System (GPS), and measuring a time period during which the UE remains in a specific cell or a TA using a timer.

In FIG. 3, in a state 330 where a TAL corresponding to a fast mobility is allocated to the UE, if a slow mobility or a stationary mobility is detected in operation 331, the UE may prepare a TAL update for the detected slow or stationary mobility in operation 340. The UE may request a network to send a slow mobile TAL or stationary mobile TAL so that the requested slow mobile TAL or stationary mobile TAL may be allocated to the UE in operation 343. Alternatively, if a fast mobility is detected in the state 330 in operation 341, the UE may maintain the state 330. Or, if a fast mobility is detected after operation 340 in the state 330, the UE may maintain the state 330.

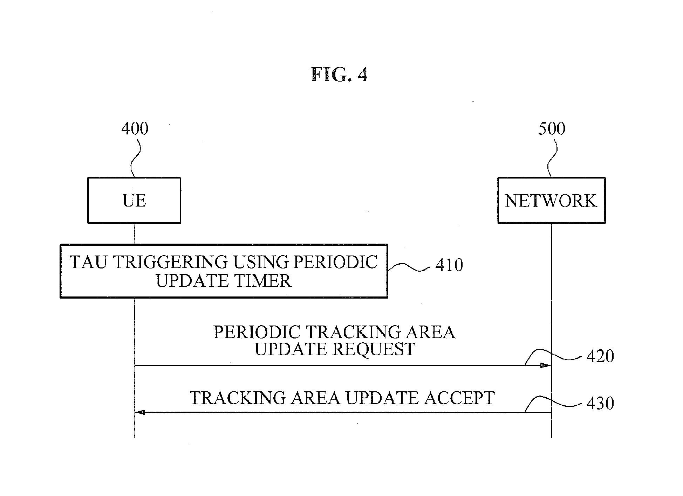

While the operation of performing the TAL update based on information on the mobility of the UE has been described with reference to FIG. 3, the TAL update may be performed if a specific event occurs. Hereinafter, an example in which the TAL update is performed upon occurrences of various events will be described with reference to FIGS. 4 to 11.

In FIGS. 4 to 11, a network 500 may include a network manager (not shown) which allocates a TAL to a UE 400. The network manager may select a TAL corresponding to a mobility of a UE 400, and may allocate the selected TAL to the UE 400.

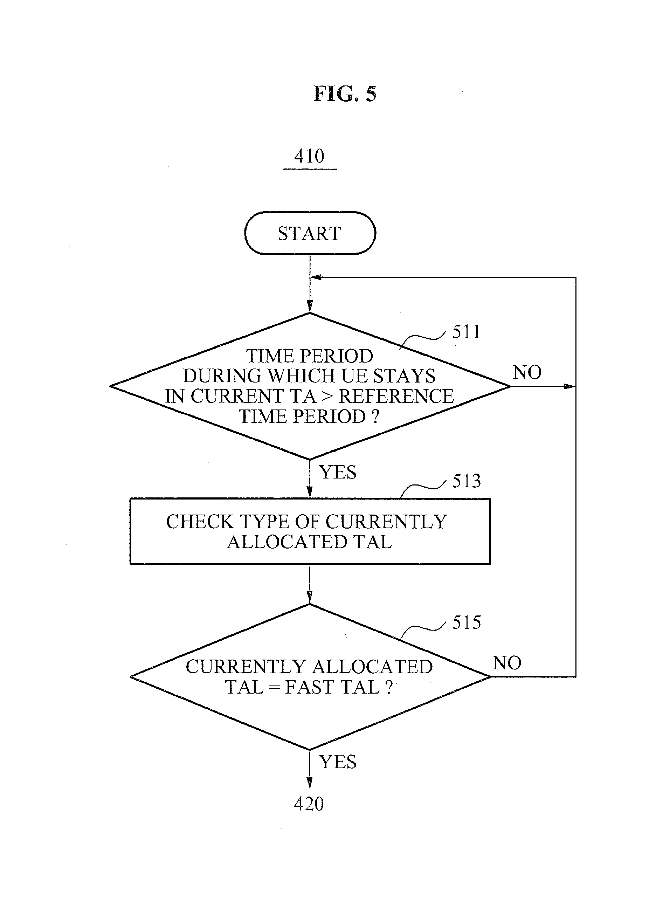

FIG. 4 is a diagram illustrating a TAU operation according to an exemplary embodiment of the present invention. In operation 410, the UE 400 performs a TAU triggering procedure using a periodic update timer. Here, "TAU triggering" refers to a state in which TAL reallocation is performed upon an occurrence of an event requiring a TAU. If the UE 400 to which a fast TAL is allocated remains in a current TA for at least a reference time period, the mobility of the UE 400 may be determined to be stationary. Operation 410 will be further described with reference to FIG. 5 below.

FIG. 5 5 is a flowchart illustrating an example of the TAU triggering procedure using the periodic update timer. In operation 511, the UE 400 determines whether a time period during which the UE 400 remains in the current TA exceeds the reference time period. Here, the reference time period may be set as several hours or several seconds. If the time period during which the UE 400 remains in the current TA is determined to exceed the reference time period, the UE 400 may check a type of a currently allocated TAL in operation 513, and may then determine whether the type of the currently allocated TAL is a fast TAL in operation 515. If the type of the currently allocated TAL is determined to be a fast TAL, the UE 400 may perform operation 420 of FIG. 4.

Referring to FIG. 4, in operation 420, the UE 400 sends a "Periodic TAU Request" message to the network 500, to request the network manager to perform a TAU. Here, the "Periodic TAU request" message may be transmitted every reference period, and may contain information on the mobility of the UE 400.

In operation 430, the UE 400 receives a "TAU Accept" message containing a new TAL from the network manager of the network 500. In this instance, the new TAL may be a slow mobile TAL or a stationary mobile TAL.

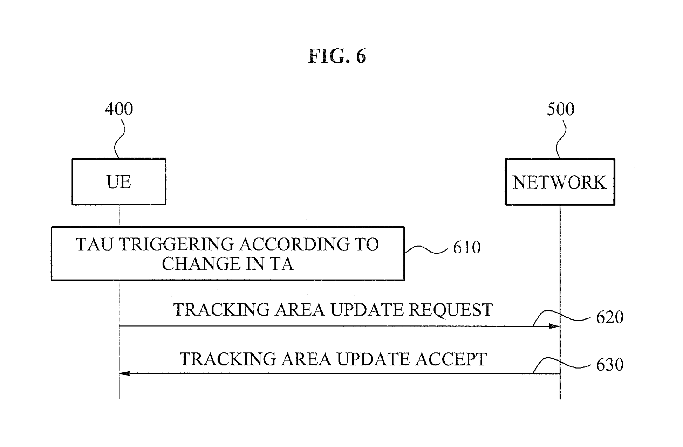

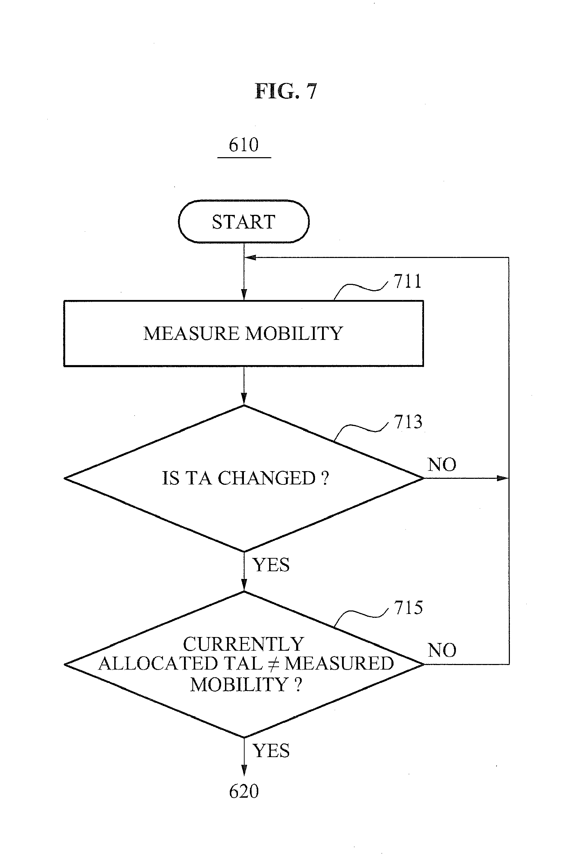

FIG. 6 is a diagram illustrating a TAU operation according to an exemplary embodiment of the present invention. In operation 610, the UE 400 performs a TAU triggering procedure according to a change in a TA. The UE 400 may determine whether a TAU is to be performed if the TA is changed while monitoring the mobility of the UE 400. If the TAU is required due to the change in the TA, the UE 400 may perform operation 620. Operation 610 will be further described below with reference to FIG. 7.

FIG. 7 is a flowchart illustrating an example of the TAU triggering procedure according to the change in the TA. In operation 711, the UE 400 measures its own mobility. In other words, the UE 400 monitors its own mobility in operation 711. In operation 713, the UE 400 determines whether a current TA to which the UE 400 belongs is changed. If the current TA is determined to be changed, the UE 400 may determine whether a type of a currently allocated TAL does not correspond to the measured mobility in operation 715. If the type of the currently allocated TAL is determined not to correspond to the measured mobility, the UE 400 may perform operation 620. For example, a fast TAL may be currently allocated to the UE 400 and the measured mobility is determined to be stationary, in which case, the UE 400 may determine that the TAU is to be performed. Alternatively, for example, a stationary TAL may be currently allocated to the UE 400 and the measured mobility is determined to be fast, in which case, the UE 400 may also determine that the TAU is required.

Referring to FIG. 6, in operation 620, the UE 400 sends a "TAU Request" message to the network 500 to request the network manager to perform a TAU. Here, the "TAU request" message may contain information on the measured mobility.

In operation 630, the UE 400 receives a "TAU Accept" message containing a TAL corresponding to the measured mobility from the network manager of the network 500.

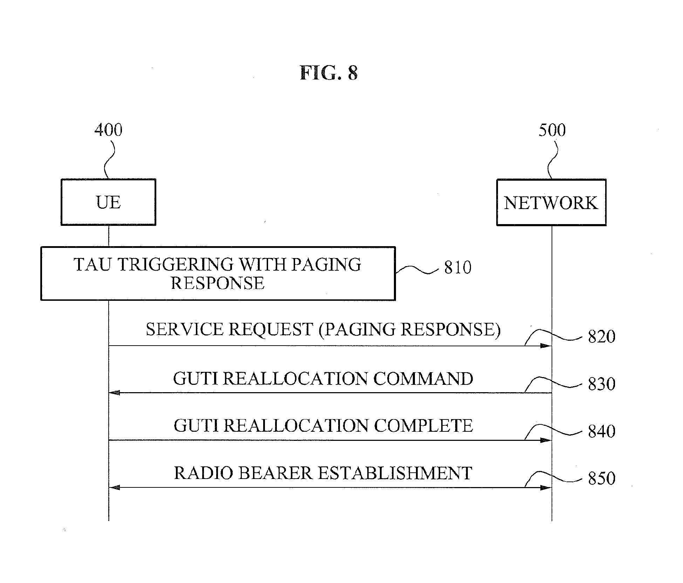

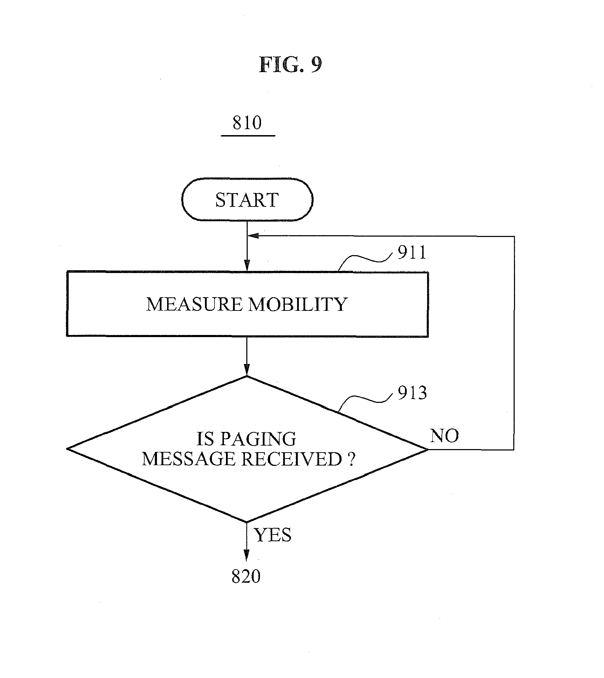

FIG. 8 is a diagram illustrating a TAU operation according to an exemplary embodiment of the present invention. In operation 810, the UE 400 performs a TAU triggering procedure with a paging response. If a type of a currently allocated TAL does not correspond to the mobility, the UE 400 prepares to perform a TAU using a paging response message. Operation 810 will be further described with reference to FIG. 9 below.

FIG. 9 is a flowchart illustrating an example of the TAU triggering procedure with the paging response. In operation 911, the UE 400 measures its own mobility. In other words, the UE 400 monitors its own mobility in operation 911. In operation 913, the UE 400 determines whether a paging message is received from the network 500. If the paging message is determined to be received, the UE 400 may perform operation 820.

Although not shown in FIG. 9, prior to operation 913, the UE 400 may determine whether a type of a currently allocated TAL corresponds to the measured mobility. If the type of the currently allocated TAL is determined not to correspond to the measured mobility, the UE 400 may perform operation 913. For example, operation 913 may be performed if a fast TAL is currently allocated to the UE 400 and the measured mobility is determined to be slow or stationary, or alternatively, if a slow or stationary TAL is currently allocated to the UE 400 and the measured mobility is determined to be fast.

Referring to FIG. 8, in operation 820, the UE 400 sends a paging response message containing the measured mobility to the network manager of the network 500. Specifically, a piggyback scheme may be used to notify the network 500 of the measured mobility. The paging response message may be a "Service Request" message. Accordingly, the TAU may be performed using an event occurring between the UE 400 and the network 500 to thereby decrease traffic congestion.

In operation 830, the UE 400 receives a new TAL corresponding to the measured mobility from the network manager of the network 500. The new TAL corresponding to the measured mobility may be received through, for example, a "Globally Unique Temporary Identity (GUTI) reallocation command." In other words, the piggyback scheme may also be used to receive the new TAL in a same manner as transmission of the measured mobility. Operations 840 and 850 provide paging procedure, and correspond to a resource allocation process.

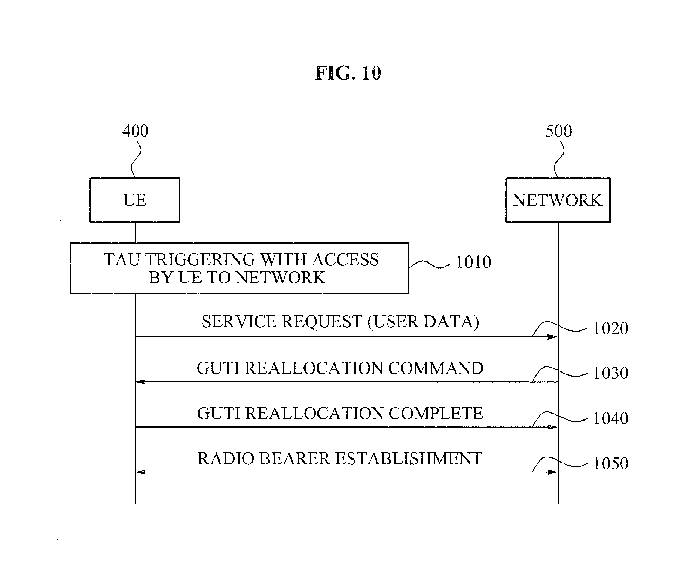

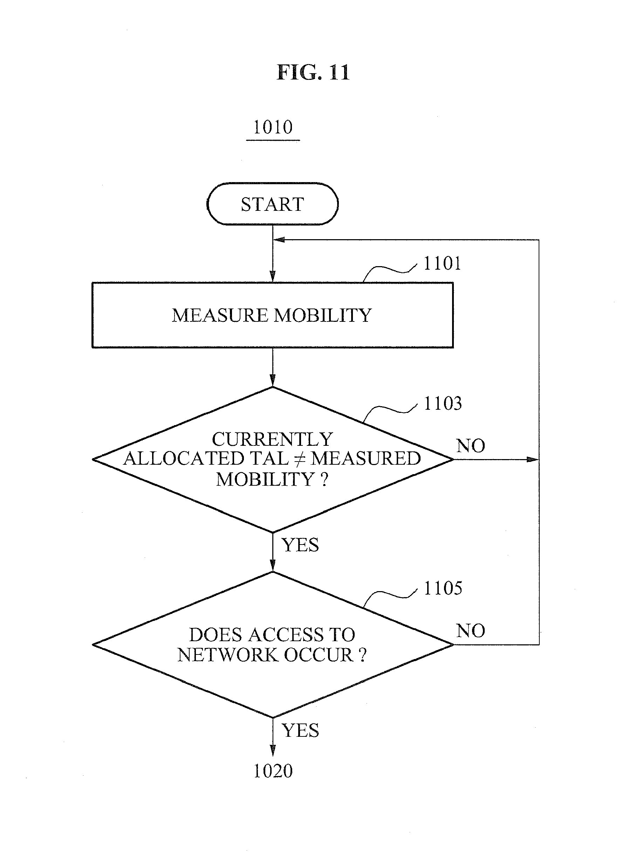

FIG. 10 is a diagram illustrating a TAU operation according to an exemplary embodiment of the present invention. In operation 1010, the UE 400 performs a TAU triggering procedure while accessing the network 500. The UE 400 may access the network 500 in a situation opposite to the paging response of FIG. 8. If a type of a currently allocated TAL is determined not to correspond to the mobility of the UE 400, the UE 400 may prepare to perform a TAU using a network access message. For example, if a fast TAL is currently allocated to the UE 400 and the measured mobility is determined to be slow or stationary, or alternatively if a slow or stationary TAL is currently allocated to the UE 400 and the measured mobility is determined to be fast, the UE 400 may prepare to perform the TAU. Operation 1010 will be further described with reference to FIG. 11 below.

FIG. 11 is a flowchart illustrating an example of the TAU triggering procedure with the access by the UE 400 to the network 500. In operation 1101, the UE 400 measures its own mobility. In other words, the UE 400 monitors its own mobility in operation 1101. In operation 1103, the UE 400 determines whether a type of a currently allocated TAL does not correspond to the measured mobility. If the type of the currently allocated TAL is determined not to correspond to the measured mobility, the UE 400 may determine whether the access to the network 500 occurs in operation 1105. For example, if a fast TAL is currently allocated to the UE 400 and the measured mobility is determined to be slow or stationary, or alternatively if a slow or stationary TAL is currently allocated to the UE 400 and the measured mobility is determined to be fast, the UE 400 may perform operation 1105. If the access to the network 500 is determined to occur, the UE 400 may perform operation 1020.

Referring to FIG. 10, in operation 1020, the UE 400 sends a "Service Request" message containing the measured mobility to the network manager. Specifically, the piggyback scheme may be used to notify the network 500 of the measured mobility. Accordingly, the TAU may be performed using an event occurring between the UE 400 and the network 500 to thereby decrease traffic congestion.

In operation 1030, the UE 400 receives a new TAL corresponding to the measured mobility from the network manager of the network 500. The new TAL corresponding to the measured mobility may be received through, for example, a "GUTI reallocation command." In other words, the piggyback scheme may also be used to receive the new TAL in the same manner as transmission of the measured mobility. Operations 1040 and 1050 provide a paging procedure, and correspond to a resource allocation process.

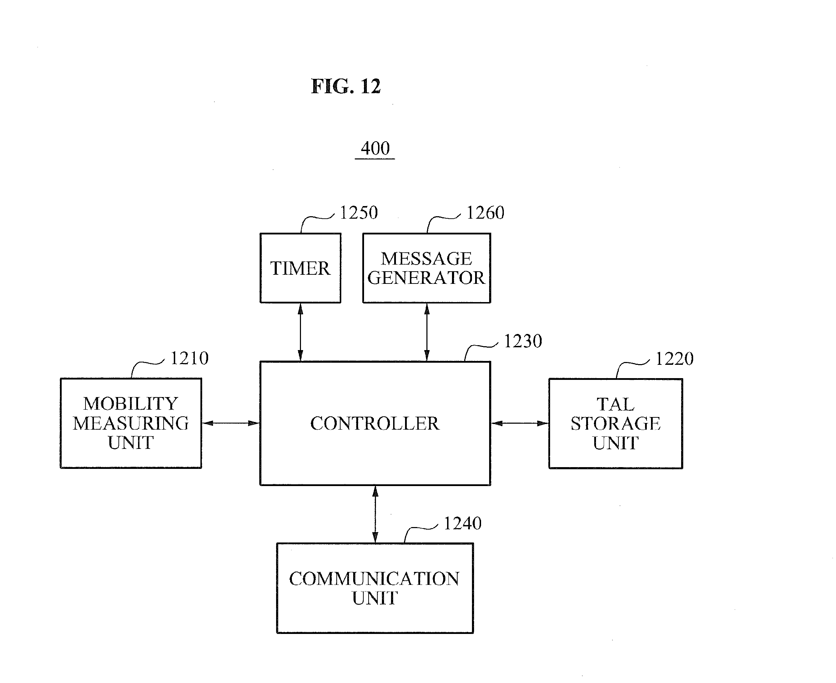

FIG. 12 illustrates a configuration of the UE 400 according to an exemplary embodiment of the present invention. The UE 400 may perform the methods described above with reference to in FIGS. 3 to 11. Referring to FIG. 12, the UE 400 may include a mobility measuring unit 1210, a TAL storage unit 1220, a controller 1230, and a communication unit 1240. The UE 400 may further include a timer 1250 and a message generator 1260.

The mobility measuring unit 1210 may measure the mobility of the UE 400. Here, the mobility of the UE 400 may be measured by calculating a cell reselection frequency, by measuring a moving velocity using a GPS, and by measuring a time period during which the UE 400 remains in a specific cell or a TA using a timer, for example, the timer 1250.

The TAL storage unit 1220 may store a TAL allocated by a network manager. The TAL stored in the TAL storage unit 1220 may correspond to a TAL which is currently allocated to the UE 400.

The controller 1230 may compare the measured mobility with the TAL stored in the TAL storage unit 1220, and may control a TAU based on an event which occurs in the UE 400.

For example, if a time period during which the UE 400 remains in a current TA exceeds a reference time period, the controller 1230 may check a type of the currently allocated TAL. If a fast TAL is determined to be currently allocated to the UE 400 as a result of checking, the controller 1230 may control the UE 400 to perform the TAU.

For example, if a type of a currently allocated TAL does not correspond to the measured mobility and if a current TA to which the UE 400 belongs is changed, the controller 1230 may control the UE 400 to notify the network manager of information on the measured mobility.

For example, if the type of the currently allocated TAL does not correspond to the measured mobility, the controller 1230 may determine whether a paging message is received. If the paging message is received, the controller 1230 may control the UE 400 to transmit a paging response message containing the measured mobility to the network manager.

For example, if the type of the currently allocated TAL does not correspond to the measured mobility, the controller 1230 may determine whether access to a network occurs. If access to the network occurs, the controller 1230 may control the UE 400 to transmit a service request message containing the measured mobility to the network manager.

The communication unit 1240 may transmit and/or receive messages used to perform the TAU under the control of the controller 1230.

The timer 1250 may be used to measure a time period during which the UE 400 remains in a specific TA. Also, the timer 1250 may notify the controller 1230 of information on whether a time period during which the UE 400 remains in a current TA exceeds the reference time period.

The message generator 1260 may generate messages used to perform the TAU under the control of the controller 1230.

The UE 400 may determine whether it is disposed in the overlapped TA based on the TAL received from the network 500. The UE 400 may be aware that it is disposed in the overlapped TA based on the TAL, and may perform the operations shown in FIGS. 3 to 11. Even if the UE 400 is not disposed in the overlapped TA, the UE 400 may also perform the operations shown in FIGS. 3 to 11. The TAL may contain information regarding a TAL type and a TAI as shown in Table 1 and Table 2. Table 1 shows an example of a TAL for a relatively large coverage, for example TAL 4 shown in FIG. 2. Table 2 shows an example of a TAL for a relatively small coverage, for example TAL 2 shown in FIG. 2. Referring to Tables 1 and 2, a TA including a TAI-22 is allocated to location A-2 shown in FIG. 2.

**[Table 1]**

| TAL type | 0: fast mobile |
|---|---|
| | 1: slow mobile or stationary mobile |
| 0 | TAI-41 |
| 0 | TAI-43 |
| 0 | TAI-44 |
| 0 | TAI-45 |
| Overlapped TA | TAI-22 |

**[Table 2]**

| TAL type | 0: fast mobile |
|---|---|
| | 1: slow mobile or stationary mobile |
| 1 | TAI-21 |
| 1 | TAI-22 |
| 1 | TAI-23 |
| Overlapped TA | TAI-22 |

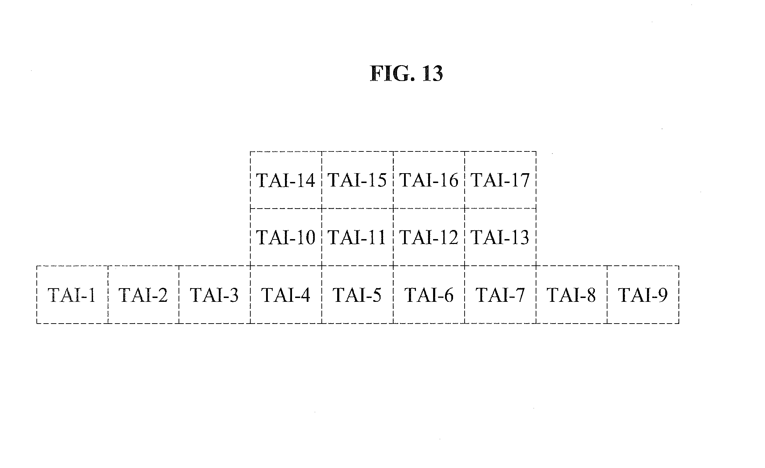

FIG. 13 illustrates a TAL allocation scheme according to an exemplary embodiment of the present invention. In FIG. 13, a TAL 1, TAL 2, TAL 3, and TAL 4, as shown in FIG. 2, are configured as shown in Table 3 below.

**[Table 3]**

| TAL ID | TAI |
|---|---|
| TAL 1 | 10, 11, 14, 15 |
| TAL 2 | 11, 12, 15, 16 |
| TAL 3 | 12, 13, 16, 17 |
| TAL 4 | 1, 2, 3, 4, 5, 6, 7, 8, 9, 10, 11, 12, 13 |
| TAL 4-1 | 4, 5, 6, 7, 10, 11, 12, 13 |
| TAL 4-2 | 1,2,3,4,5, 10, 11 |
| TAL 4-3 | 6, 7, 8, 9, 12, 13 |

Referring to Table 3, a TAL 4 indicates a TAL of an area where a great number of fast mobiles are distributed, for example, a road or a subway. A TAL 1, a TAL 2, and a TAL 3 indicate TALs of an area where residential houses or offices are mainly located. A TAL 4-1, a TAL 4-2, and a TAL 4-3 are examples in which a fast TAL is adaptively set.

A TAL may be adaptively set to the UE 400 based on a current TA and a time at which the TAU is requested. For example, the TAL 4 may be currently allocated to the UE 400, and the UE 400 remains in a TA with TAI-10 for a specific time, if the mobility of the UE 400 is determined to be slow or stationary, TAL 4-1 and TAL 4-2 may be allocated to the UE 400, instead of the TAL 1. In this instance, the specific time may be, for example, a time where the currently allocated TAL of the UE 400 is to be changed to fast TAL.

If a movement pattern of the UE 400 is recorded at intervals of time, the most suitable TAL may be allocated to the UE 400. For example, TAL 2 may be allocated to the UE 400 and the UE 400 remains in a TA with TAI-11, if a TAU is performed around a closing time of a reference time or interval, TAL 4-2 may be allocated to the UE 400. Alternatively, if the TAU is performed at any time other than the closing time, TAL 4 or TAL 4-3 may be allocated to the UE 400.

The methods according to the exemplary embodiments of the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
An apparatus and method for managing a paging area may induce a paging area to be allocated to a User Equipment (UE). A paging area may be controlled to be updated upon an occurrence of an event and may reduce traffic congestion.

## Claims

1. A method for managing a paging area, the method comprising:
determining a type of a currently allocated Tracking Area List (TAL) if a time period during which a User Equipment (UE) remains in a current Tracking Area (TA) exceeds a reference time period;
transmitting a Tracking Area Update (TAU) request to a network manager of a network if the type of the currently allocated Tracking Area List is determined to be a Tracking Area List for a fast-moving equipment; and
receiving a new Tracking Area List from the network manager.

2. The method of claim 1, wherein the new Tracking Area List is a Tracking Area List for a stationary equipment or a Tracking Area List for a slow-moving equipment.

3. The method of claim 1 or 2, wherein the new Tracking Area List is set based on the current Tracking Area and a time at which the Tracking Area Update request is sent.

4. A method for managing a paging area, the method comprising:
measuring a mobility of a User Equipment (EU);
determining a type of a currently allocated Tracking Area List (TAL);
determining whether a current Tracking Area (TA) to which the User Equipment belongs is changed;
notifying a network manager of a network of the measured mobility of the User Equipment if the type of the currently allocated Tracking Area List (TAL) does not correspond to the measured mobility of the User Equipment and if the current Tracking Area to which the User Equipment belongs is determined to be changed; and
receiving a new Tracking Area List corresponding to the measured mobility of the User Equipment from the network manager.

5. A method for managing a paging area, the method comprising:
measuring a mobility of a User Equipment (UE);
determining a type of a currently allocated Tracking Area List (TAL);
determining whether a paging message is received, if the type of the currently allocated Tracking Area List does not correspond to the measured mobility of the User Equipment;
transmitting a paging response message containing the measured mobility of the User Equipment to a network manager of a network, if the paging message is received; and
receiving a new Tracking Area List corresponding to the measured mobility of the User Equipment from the network manager.

6. A method for managing a paging area, the method comprising:
measuring a mobility of a User Equipment (UE);
determining a type of a currently allocated Tracking Area List (TAL);
determining whether an access to a network occurs, if the type of the currently allocated Tracking Area List does not correspond to the measured mobility of the User Equipment;
transmitting a service request message containing the measured mobility of the User Equipment to a network manager of a network, if the access to the network occurs; and
receiving a new Tracking Area List corresponding to the measured mobility of the User Equipment from the network manager.

7. The method of any of claim 4 to 6, wherein the currently allocated Tracking Area List is a Tracking Area List for a fast-moving equipment, and the new Tracking Area List corresponding to the measured mobility of the User Equipment is a Tracking Area List for a stationary equipment or a slow-moving equipment.

8. The method of any of claims 4 to 6, wherein the currently allocated Tracking Area List is a Tracking Area List for a stationary equipment or slow-moving equipment, and the new Tracking Area List corresponding to the measured mobility of the User Equipment is a Tracking Area List for a fast-moving equipment.

9. The method of any of claims 4 to 8, wherein the Tracking Area List corresponding to the measured mobility of the User Equipment is set based on the current Tracking Area and a time at which the network manager is notified of the measured mobility of the User Equipment.

10. An apparatus to manage a paging area, the apparatus comprising:
a mobility measuring unit to measure a mobility of a User Equipment (UE);
a storage unit to store an allocated Tracking Area List (TAL);
a controller to compare the measured mobility of the User Equipment with a type of the allocated Tracking Area List and to control a Tracking Area Update (TAU) based on an event, the event occurring in the User Equipment; and
a communication unit to transmit and/or receive a message used to perform the Tracking Area Update.

11. The apparatus of claim 10, wherein, if the event occurs, the event comprising a time period during which the User Equipment remains in a current Tracking Area (TA) exceeding a reference time period, the controller controls the User Equipment to request the Tracking Area Update if the type of the currently allocated Tracking Area List is determined to be a Tracking Area List for a fast-moving equipment, and
wherein, preferably, the event further comprises the controller determining a type of the allocated Tracking Area List and determining that the type of the currently allocated Tracking Area List is a Tracking Area List for a fast-moving equipment.

12. The apparatus of claim 10 or 11, wherein, if the event occurs, the event comprising the controller determining a change in the current Tracking Area, the controller controls the User Equipment to notify the network manager of the measured mobility of the User Equipment, and
wherein, preferably, the event further comprises the controller determining that a type of a currently allocated Tracking Area List does not correspond to the measured mobility of the User Equipment.

13. The apparatus of any of claims 10 to 12, wherein, if the event occurs, the event comprising receiving a paging message, the controller controls the User Equipment
to transmit a paging response message containing the measured mobility of the User Equipment to the network manager, and
wherein, preferably, the event further comprises the controller determining that a type of a currently allocated Tracking Area List does not correspond to the measured mobility of the User Equipment.

14. The apparatus of any of claims 10 to 13, wherein, if the event occurs, the event comprising the controller determining whether an access to a network occurs; the controller controls the User Equipment to transmit a service request message containing the measured mobility of the User Equipment to a network manager, and
wherein, preferably, the event further comprises the controller determining that a type of a currently allocated Tracking Area List does not correspond to the measured mobility of the User Equipment.

15. The apparatus of any of claims 10 to 14, wherein the communication unit receives a Tracking Area List corresponding to the measured mobility of the User Equipment, and the Tracking Area List corresponding to the measured mobility of the User Equipment is set based on the current Tracking Area and a time at which the Tracking Area Update is requested.
